# EUROPEAN PATENT APPLICATION

(11) **EP 4 060 271 A1**
(43) Date of publication of application: **21.09.2022**
(21) Application number: 21305342.4
(22) Date of filing: 19.03.2021
(51) Int. Cl.: F27D 5/00

(54) **KILN FURNITURE**

(71) Applicant: ImerTech SAS, 75015 Paris (FR)
(72) Inventor: JOCHIMS, Wilhelm Herbert, 86368 Gersthofen (DE)
(74) Representative: Haseltine Lake Kempner LLP

(57) **Abstract**

The present disclosure relates to a kiln furniture T-cassette for supporting ceramic objects to be fired in a kiln, comprising a) supporting object comprising: one or two supporting surface(s) for supporting one or more ceramic object(s) to be fired, and side surfaces; b) one or more feet located on a side surface, wherein said one or more feet are exclusively located on a single side surface; c) at least one of the one or more feet comprising one or more holes and/or recesses suitable for acting as a female engagement portion for appropriately shaped male engagement portions of another kiln furniture cassette, such as another kiln furniture T-cassette; and d) one or more male engagement portions located on a side surface for appropriately shaped female engagement portions of another kiln furniture cassette. The present disclosure further relates to an assembly and a kit-of-parts comprising a T-cassette, a method for forming a kiln furniture assembly for supporting objects to be fired in a kiln using a T-cassette and to the use of a T-cassette for supporting one or more ceramic object(s) to be fired in a kiln

## Description

### FIELD OF THE INVENTION

The present application relates to a kiln furniture T-cassette, an assembly comprising the T-cassette and a method for forming this assembly. Furthermore, the present application relates to a kits-of-parts comprising the T-cassette and the use of the T-cassette for supporting one or more ceramic object(s) to be fired in a kiln.

### BACKGROUND OF THE INVENTION

In the production process of ceramic products, the ceramic product precursors, *i.e.,* the green ceramic products, are fired in a kiln. Firing temperatures in a kiln may be up to 1230°C and the duration for heating up, soaking time and cooling down may be up to 72 hours. In order to avoid deformation through softening of the green ceramic products during firing, such products are commonly supported on refractory kiln furniture cassettes. Such cassettes are well known in the art and come in a large variety of shapes and sizes, as described, e.g. in prior art documents EP 0 965 809 B1, WO 2007/132276 A1, EP 2 631 583 B1 or DE 20 2010 005 560 U1, which are hereby incorporated by reference in their entirety.

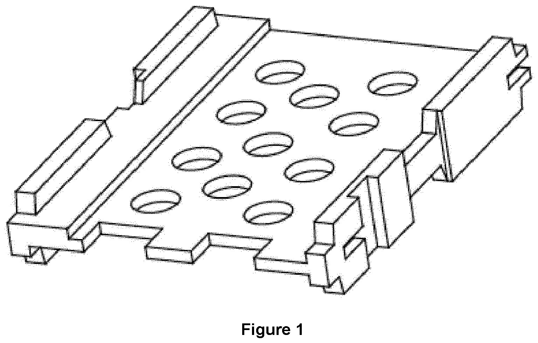

In the case of relatively heavy regularly shaped objects, such as roofing tiles, H-shaped cassettes, such as for example shown in Fig. 1, are presently preferred, since they offer good stability and may be stacked on top of one another forming a stable assembly and, in addition, the H-shaped cassettes leave enough space between the substantially rectangular support portions such that each cassette may support one or several ceramic products to be fired and allow for air circulation.

Hence, commonly, H-shaped cassettes are arranged in a kiln by stacking of H-shaped cassettes on top of each other, in a way that enough space is left between the support portions to allow support of objects to be fired thereon, and subsequent juxtaposition of a plurality of stacks/blades of cassettes. Such a regular pattern of arranging identical cassettes of known dimensions allows straightforward calculation of the number of cassettes that fit into a kiln and therefore of single ceramic objects that may be fired in a single firing operation. The arrangement of the cassettes is usually performed by machines, which quickly and precisely arrange the cassettes.

The feet of the bottom cassettes in cassette stacks/blades rest on reinforced resting spots on kiln cars for loading and unloading the cassettes with the objects to be fired into the kiln. During heating to the firing temperature of up to 1230°C, the cassettes and the kiln car (and, thus, the reinforced resting spots thereof) undergo different thermal expansion, which is not only due to the different materials of the cassettes and the kiln car, but also due to the fact that the kiln car has a more massive structure compared with the cassettes, which results is slower heating expanding. Thus, the feet of an H-cassette resting on the reinforced resting spots of the kiln car move relative to the reinforced resting spots, resulting in friction therein between. This can lead to extra strain on the materials leading to abrasion and chipping of the cassette material. This in turn may cause the cassette to become unusable for forming stable decks, as a collapse of the stacked cassettes within the kiln may occur during firing, which renders the respective production charge unusable or even require maintenance of the kiln. However, for economic and ecological reasons, it is desirable that such cassettes are used as often as possible.

Furthermore, during the firing process, energy is required to heat all the contents of the kiln, including both the green ceramic objects to be fired and the cassettes. It is therefore desirable to reduce the mass of kiln furniture used as much as possible in relation to the mass of the objects to be fired. A reduced relative mass of cassettes leads to an increased energetic efficiency of the firing process. It is already known to reduce the mass of the H-cassettes by perforating the supporting surface or using feet not extending over the whole length of a side of the supporting surface such as shown in Fig. 1. However, further reducing the thermal mass of the cassettes is desired.

The dimensions of a kiln sets a physical limit to the number of cassettes to be introduced simultaneously into the kiln and, thus, the number of ceramic objects to be fired during each firing operation. However, H-cassettes need to be arranged with a certain distance to each other to leave enough room for thermal expansion. Thus, it could increase efficiency for a larger number of green ceramic products to be simultaneously fired in the kiln as is possible with current H-cassettes.

In addition, it is not possible, for example with the H-cassette arrangement of EP 2 631 583 B1, to have the exact number of cassettes needed, whether an even or odd number of cassettes.

There is therefore a need to provide kiln furniture to address one or more of the problems of the prior art.

### SUMMARY OF THE INVENTION

The present invention is defined in the appended claims.

In accordance with a first aspect, there is provided a kiln furniture T-cassette for supporting ceramic objects to be fired in a kiln, comprising:
a) a supporting object comprising:
   - one or two supporting surface(s) for supporting one or more ceramic object(s) to be fired; and
   - side surfaces;
b) one or more feet located on a side surface, wherein said one or more feet are exclusively located on a single side surface;
c) at least one of the one or more feet comprising one or more holes and/or recesses suitable for acting as a female engagement portion for appropriately shaped male engagement portions of another kiln furniture cassette, such as another kiln furniture T-cassette; and
d) one or more male engagement portions located on a side surface for appropriately shaped female engagement portions of another kiln furniture cassette.

In accordance with a second aspect, there is provided a kiln furniture assembly for supporting ceramic objects to be fired in a kiln, comprising:
a) one or more kiln furniture T-cassette(s) according to the present disclosure; and
b) one or more kiln furniture H-cassette(s), comprising
   i) a supporting object comprising
      - one or two supporting surface(s) for supporting one or more ceramic object(s) to be fired; and
      - side surfaces;
   ii) one or more feet located on each of two opposite side surfaces; and
   iii) at least one of the one or more feet on each of the two opposite side surfaces comprising one or several holes and/or recesses suitable for acting as a female engagement portion for appropriately shaped male engagement portions of another kiln furniture cassette;
   wherein at least one T-cassette and at least one H-cassette are connected through their engaging male and female engagement portions.

In accordance with a third aspect, there is provided a method for forming a kiln furniture assembly for supporting objects to be fired in a kiln, comprising the following steps:
a) providing at least one T-cassette according to the present disclosure;
b) providing at least one H-cassette as defined in the present disclosure;
c) connecting one T-cassette with one H-cassette through their engaging male and female engagement portions, thereby forming a row;
d) optionally, expanding the row of step c) by connecting further T-cassettes with the T- and/or the H-cassette of step c);
e) optionally, repeating steps c) and d), if present, once or several times thereby forming (a) further row(s);
f) if step e) is present, optionally stacking two or more rows on top of one another thereby forming a blade.

In accordance with a fourth aspect, there is provided a kit-of-parts for supporting objects to be fired in a kiln, comprising:
a) one or more kiln furniture T-cassette(s) according to the present disclosure; and
b) one or more kiln furniture H-cassette(s) as defined in the present disclosure.

In accordance with a fifth aspect, there is provided a use of a kiln furniture T-cassette comprising:
a) a supporting object comprising:
   - one or two supporting surface(s) for supporting one or more ceramic object(s) to be fired; and
   - side surfaces;
b) one or more feet located on a side surface, wherein said one or more feet are exclusively arranged on a single side surface;
c) at least one of the one or more feet comprising one or more holes and/or recesses suitable for acting as a female engagement portion for appropriately shaped male engagement portions of another kiln furniture cassette; and
d) one or more male engagement portions located on a side surface for appropriately shaped female engagement portions of another kiln furniture cassette.
for supporting one or more ceramic object(s) to be fired in a kiln.

Certain embodiments of the present invention may provide one or more of the following advantages:
- desired reduced thermal mass of the cassettes;
- desired reduction of abrasion and chipping of the cassettes;
- improved lifetime of cassettes:
- desired reduction of costs;
- desired longer use before replacement required;
- possibility of narrower arrangement of the objects to be fired in the kiln, thereby enabling to fire more objects simultaneously in the kiln;
- stable blade of cassettes, due to the connection of the cassettes via their female and male engagement portions;

The details, examples and preferences provided in relation to any particular one or more of the stated aspects of the present invention apply equally to all aspects of the present invention. Any combination of the embodiments, examples and preferences described herein in all possible variations thereof is encompassed by the present invention unless otherwise indicated herein, or otherwise clearly contradicted by context.

### BRIEF DESCRIPTION OF THE DRAWINGS

The invention will further be illustrated by reference to the following figures:
- Fig. 1: shows an example of a commonly used H-cassette, which is also usable in the assembly, method and kit-of-parts according to the present disclosure.
- Fig. 2a: shows an example of a row of adjacent H-cassettes used in the prior art.
- Fig. 2b: shows and example of an H-cassette and two T-cassettes according to the present disclosure prior to connecting these cassettes.
- Fig. 2c: shows the cassettes of Fig. 2b connected to each other.
- Fig. 3a: shows an example of an H-cassette and structurally different T-cassettes on either side of the H-cassette prior to connection.
- Fig. 3b: shows the cassettes of Fig. 3a after connection.
- Fig. 4: shows an example of a roofing tile which may be fired in the kiln using the cassettes of the present disclosure.
- Fig. 5a: shows examples of cassettes having male and female engagement portions suitable in the present disclosure prior to connection.
- Fig. 5b: shows the cassettes of Fig. 5a after connection.
- Fig. 5c: shows another example of cassettes having male and female engagement portions suitable in the present disclosure prior to connection.
- Fig. 6a: shows another examples of cassettes having male and female engagement portions suitable in the present disclosure prior to connection.
- Fig. 6b: shows the cassettes of Fig. 6a after connection.
- Fig. 7a: shows another examples of cassettes having male and female engagement portions suitable in the present disclosure prior to connection.
- Fig. 7b: shows the cassettes of Fig. 7a after connection.
- Fig. 8a: shows a view of an H-cassette, a T-cassette and two identical roofing tiles to be fired in a kiln prior to connecting the cassettes used in the example of the present application.
- Fig. 8b: shows another view of the cassettes and ceramic objects of Fig. 8a.
- Fig. 9a: shows a plurality of rows of T-cassettes connected to an H-cassette stacked on top of one another and loaded with roofing tiles to be fired used in the example of the present application.
- Fig. 9b: shows another view of the cassettes and ceramic objects of Fig. 9a.
- Fig. 10: shows regular H cassettes after usage according to the prior art.
- Fig. 11: shows the cassettes according to an embodiment of the present disclosure after usage.

It is understood that the following description and references to the figures concern exemplary embodiments of the present invention and shall not be limiting the scope of the claims.

### DETAILED DESCRIPTION

The present invention is based on the surprising finding that replacing many H-cassettes with T-cassettes in kiln furniture leads to an efficient way of firing objects in a kiln. In addition, it was surprisingly found that by connecting the cassettes using joints that allow uninhibited movement of the cassettes upon expansion and contraction, as described in the present invention, the lifetime of the cassettes may be increased and less damage due to use may be observed.

In the present disclosure the term "feet" encompasses a single foot as well as one or more feet, e.g., in the expression "one or more feet", unless explicitly mentioned to the contrary and/or the context clearly dictates otherwise.

### T-cassette

As outlined above, in accordance with the first aspect, there is provided a kiln furniture T-cassette for supporting ceramic objects to be fired in a kiln, comprising:
a) a supporting object comprising:
   - one or two supporting surface(s) for supporting one or more ceramic object(s) to be fired; and
   - side surfaces;
b) one or more feet located on a side surface, wherein said one or more feet are exclusively arranged on a single side surface;
c) at least one of the one or more feet comprising one or more holes and/or recesses suitable for acting as a female engagement portion for appropriately shaped male engagement portions of another kiln furniture cassette; and
d) one or more male engagement portions located on a side surface for appropriately shaped female engagement portions of another kiln furniture cassette.

The T-cassette according to the present disclosure does not comprise any further feet except those defined in item b).

Each side surface shares one edge with the supporting surface and, if two supporting surfaces are comprised in the supporting object, said side surface shares a further edge with this second supporting surface. In one embodiment, said two edges, if applicable, are opposite edges of said side surface and, for example, may be substantially parallel to each other. Furthermore, each side surface shares two edges with two further side surfaces. In one embodiment, said two edges are opposite edges of said side and, for example, may be substantially parallel to each other. In one embodiment, the side surfaces are substantially perpendicular to at least one of the one or two supporting surface(s). In one embodiment, two supporting surfaces are comprised in the supporting object, and, for example said supporting surfaces are substantially parallel to each other.

In one embodiment the one or more feet defined in item b) are substantially perpendicular to at least one of the one or two supporting surface(s).

In one embodiment, the two dimensions of the supporting surface(s), herein later referred to as width and length of the supporting object, are significantly larger than the third dimension, herein later referred to as thickness of the supporting object, for example, larger by a factor of 4.0, or 5.0 or 6.0.

In one embodiment, the width of the supporting object is from about 5.0 cm to about 60 cm and the length of the supporting object is from about 20 cm to about 60 cm. For example, the width of the supporting object is from about 4.0 cm to about 55 cm and the length of the supporting object is from about 4.0 cm to about 55 cm

In one embodiment, the thickness of the supporting object is from about 0.4 cm to about 20 cm, for example is from about 0.4 cm to about 10 cm.

The term "substantially perpendicular" expresses that an exact perpendicular arrangement is not mandatory but depending on the size of the cassette and the application may vary slightly therefrom. The term "substantially perpendicular" encompasses a variation of about ±5°, or about ±1 °, or about ±0.5°. The skilled person is aware of such variations. In some examples the feet may be square or rectangular, or the feet may have a trapezoid shape.

The term "substantially parallel" expresses that an exact parallel arrangement is not mandatory but depending on the size of the cassette and the application may vary slightly therefrom. The term "substantially parallel" encompasses a variation of about ±5°, or about ±1°, or about ±0.5°. The skilled person is aware of such variations.

Male and female engagement portions are generally known in the art. In the T-cassette according to the present disclosure, at least one of the one or more feet comprise(s) one or more hole(s) and/or recess(es) suitable for acting as a female engagement portion for appropriately shaped male engagement portions of another kiln furniture cassette; and one or more male engagement portions located on a side surface for appropriately shaped female engagement portions of another kiln furniture cassette.

The T-cassettes according to the present disclosure can be connected to each other using their male and female engagement portions. Hence, a first T-cassette can be connected by its male engagement portion(s) to the female engagement portions of a second T-cassette or an H-cassette. When in use, the male engagement portion(s) of the first T-cassette rest(s) on the bottom of the respective female engagement portion(s) of said second T-cassette or the H-cassette. Thus, the first T-cassette stands on their own one or more feet and on the one or more feet of said second T-cassette or H-cassette.

According to the present disclosure, the first T-cassette can support ceramic objects to be fired in a kiln without the need for further feet arranged on a further side surface of the T-cassette. Hence, a T-cassette stands on the one or more feet located on its side surface and the one or more feet of the adjacent cassette to which the male engagement portions of said T-cassette are connected. This adjacent cassette may be a further T-cassette or an H-cassette. Thus, the total number of feet required to support the same number of ceramic objects to be fired is significantly lower that when using H-cassettes alone, thereby saving space. A large number of T-cassettes may be arranged juxtaposed in this manner, thereby forming a row. The male engagement portions of the outermost T-cassette of this row may be connected to an H-cassette to provide the necessary stability for standing on the reinforced resting spots of the kiln car. This arrangement will be described in the second aspect below in more detail.

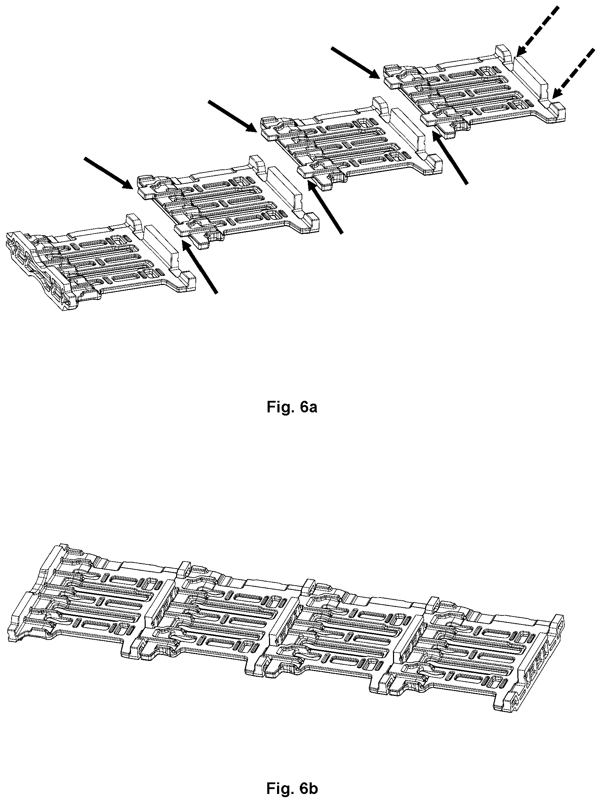

According to the present invention, the male engagement portions of the T-cassettes are partially inserted into the female engagement portions of the adjacent cassette, e.g., another T-cassette or an H-cassette, upon connecting the cassettes to each other. In other words, adjacent cassettes are connected, but a gap is present between the end of the male engagement portion and the far surface of the female engagement portion. Thereby, the cassettes are arranged to allow each male engagement portion and female engagement portion to undergo thermal expansion without restriction when heated to a temperature of up to 1230°C, which is described in more detail below. This said gap may allow the cassettes to be connected without causing damage and/or allow the cassettes to expand and contract upon heating and cooling without being damaged. In the present application, "partially inserted" also includes the case, wherein the male engagement portions are laying on the female engagement portions. A non-limiting example therefor is shown in Figs. 6a and 6b.

In addition, the T-cassettes according to the present disclosure allow for an even and an odd number of juxtaposed arranged cassettes, *e.g.,* an H-cassette and one, two, three, *etc.* T-cassettes, thereby enabling to efficiently use the available space in a kiln. Furthermore, compared with a row of H-cassettes only, more cassettes can be arranged juxtaposed on the same length, thereby enabling to fire more objects simultaneously. Said length is limited by the width of the kiln.

In one embodiment, the male and female engagement portions are arranged substantially parallel to the supporting surface(s) and/or are arranged substantially perpendicular to the one or more feet, for example, the male and female engagement portions are arranged substantially perpendicular to the one or more feet and, optionally, are arranged substantially parallel to the supporting surface(s). In this embodiment, a direction for engaging and disengaging the male and female engagement portions is also substantially parallel to the supporting surface(s) and/or is also substantially perpendicular to the one or more feet, for example, a direction for engaging and disengaging the male and female engagement portions is also substantially perpendicular to the one or more feet and, optionally, also substantially parallel to the supporting surface(s).

In one embodiment, the male and female engagement portions are located on opposing side surfaces. In one embodiment, the male and female engagement portions are located on opposing side surfaces and the female engagement portions are comprised in the one or more feet which are exclusively located on a single side surface, and the male engagement portions are arranged on the side surface opposite to the side surface on which the feet are arranged.

Further embodiments of the T-cassette according to the present disclosure are described below.

Furthermore, the embodiments of the T-cassette according to the present disclosure also apply to the H-cassette defined in the present disclosure unless the context dictates otherwise and/or explicitly mentioned to the contrary.

### Assembly

As outlined above, in accordance with the second aspect, there is provided a kiln furniture assembly for supporting ceramic objects to be fired in a kiln, comprising
a) one or more kiln furniture T-cassette(s) according to the first aspect; and
b) one or more kiln furniture H-cassette(s), comprising
   i) a supporting object comprising
      - one or two supporting surface(s) for supporting one or more ceramic object(s) to be fired; and
      - side surfaces;
   ii) one or more feet located on each of two opposite side surfaces; and
   iii) at least one of the one or more feet on each of the two opposite side surfaces comprising one or more holes and/or recesses suitable for acting as a female engagement portion for appropriately shaped male engagement portions of another kiln furniture cassette;
   wherein at least one T-cassette and at least one H-cassette are connected through their engaging male and female engagement portions.

Embodiments of the T-cassette according to the present disclosure are also embodiments of the assembly according to the present disclosure and *vice versa.*

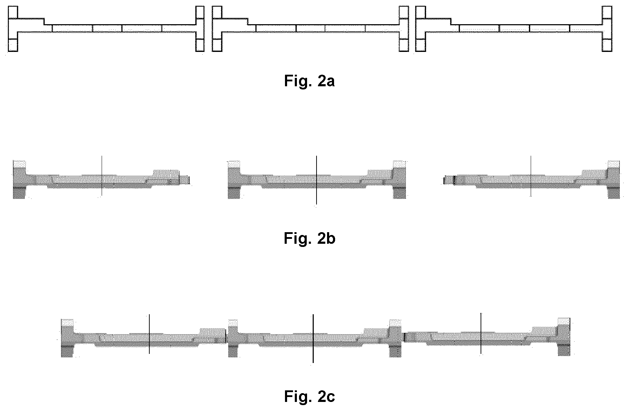

As outlined for the first aspect above, a large number of T-cassettes may be arranged juxtaposed and the male engagement portions of the outermost T-cassette of this arrangement may be connected to an H-cassette to provide the necessary stability for standing on the reinforced resting spots of the kiln car. Although an H-cassette may still be prone to abrasion or chipping, by the above assembly, all but one cassette of a row of H-cassettes can be replaced by the T-cassettes according to the present disclosure. Thus, for example, three separate H-cassettes arranged next to each other as shown in Fig. 2a may be replaced by an assembly comprising an H-cassette and two T-cassettes, wherein a T-cassette is attached to each side of the H-cassette as shown in Fig. 2b (prior to engaging the male and female engagement portions) and Fig. 2c (after engaging the male and female engagement portions). It is also possible to arrange two T-cassettes on one side of the H-cassette. Of course further T-cassettes may be connected to such assemblies depending on the kiln size.

In one embodiment, the cassettes are arranged to allow each male engagement portion and female engagement portion to undergo thermal expansion without restriction when heated to a temperature of up to 1230°C. Leaving a gap between the ends of each male engagement portion of the T-cassette and each female engagement portion of the adjacent cassette allows thermal expansion without restriction. Hence, prior to firing in the kiln, the T-cassettes are arranged such that the T-cassette can, in principle, be moved further towards the adjacent cassette. If the cassettes are moved, a gap still remains between the side surface of the T-cassette bearing the male engagement portions and the adjacent cassette. Upon firing in the kiln, as outlined above, each of the cassettes expands faster than the kiln car. Thus, upon thermal expansion, the male and female engagement portions of two connected cassettes expand towards each other. Due to a gap being present between the male and female engagement portions, they can undergo thermal expansion without restriction. The thermal expansion does not result in the two connected cassettes pushing each other away, thereby avoiding friction between the feet of the cassettes resting on the reinforced resting spots of a kiln car and this reinforced resting spots. As outlined above, such friction leads to undesirable abrasion and chipping. Furthermore, once the target temperature is reached, the cassettes will usually reach their final thermal expansion before the kiln car reaches its final thermal expansion. This is due to the lower thermal mass of the cassettes compared with the kiln car. However, the final thermal expansion of the kiln car is usually higher than that of the cassettes. Hence, once the cassettes have reached their final thermal expansion, the kiln car usually still expands, thereby moving the reinforced resting spots of the kiln cars and, thus, the feet of the cassettes standing thereon away from each other. However, the feet of the T-cassette are not forced to undergo a relative movement with respect to the reinforced resting spots of the kiln car. Thus, no friction between the feet thereof and these reinforced resting spots is caused since the male engagement portions can move without restriction in the female engagement portions as explained above.

The necessary space between two cassettes which are connected through their male and female engagement portions to allow these male engagement portion and female engagement portion to undergo thermal expansion without restriction when heated to a temperature of up to 1230°C can be easily determined by the skilled person, e.g., based on the dimension of the cassettes, the material of the cassette and the temperature up to which the cassettes are fired in the kiln. Furthermore, such cassettes are normally arranged by devices which comprise means for setting a fixed distance between two adjacent cassettes, thereby ensuring that the cassettes according to the present disclosure are arranged with the necessary space therein between.

In the other situation, *i.e.,* in case T-cassette would be inserted until the end reached the far surface of the female engagement portions of the adjacent cassette (*e.g.,* another T-cassette or an H-cassette), *i.e.,* the T-cassette cannot be moved further towards the adjacent cassette, prior to firing in the kiln. Upon firing in the kiln, as outlined above, each of the cassettes expands faster than the kiln car. Hence, two connected cassettes would push each other away, thereby causing friction between the feet of the cassettes resting on the reinforced resting spots of a kiln car and this reinforced resting spots.

In one embodiment, the thermal expansion is about 0.15% or more based on the dimensions of the T-cassette, for example about 0.20% or more, or about 0.25% or more. Usually, the thermal expansion is 0.50% or less based on the dimensions of the T-cassette. As well-known in the art, a kiln furniture cassette expands in all directions upon heating. Hence, a percentage value based on the dimensions of the T-cassette is given. In the present disclosure, the thermal expansion denotes the total increase in the direction of measuring the thermal expansion.

According to the present disclosure, the thermal expansion is measured on a Netsch DIL 402 PC according to EN 821-1 1998. Usually, a 5 x 5 x 50 mm³ sample is cut out of the cassette and the thermal expansion is measured between 20 °C to 1000 °C and at a heating rate of 5°C/min.

In most cases, the direction of the row of the cassettes is also a direction for connecting the cassettes through their male and female engagement portions. The thermal expansion in the direction of the row of the cassettes is of particular importance in the present disclosure, because the side of the supporting surface(s) of the T-cassettes on which the one or more male engagement portions is/are located moves towards the adjacent cassette this/these male engagement portions are connected to upon thermal expansion. Hence, in one embodiment, the cassettes are arranged at a distance from each other such that (i) the male engagement portions are partially but not fully inserted prior to thermal expansion and (ii) do not reach the position of full insertion during thermal expansion and contraction upon subsequent cooling.

For example, in case of a T-cassette having a width of 40 cm, the thermal expansion when heating from 25°C to 1230°C is about 1.2 mm when using cordierite as cassette material. Thus, in this example, at 25°C the male engagement portions of the T-cassettes are not fully inserted into the respective female engagement portions but at a position of at least about 3 mm away from the position of full insertion viewed in direction of the rows of cassettes.

In one embodiment, the number of kiln furniture T-cassette(s) is the same or higher than the number of kiln furniture H-cassette(s), for example the number of kiln furniture T-cassette(s) may be at least about two times higher, or at least about four times higher or at least about six times higher than the number of kiln furniture H-cassette(s). The total number of cassettes in the assembly according to the present disclosure is limited by the size of the kiln. Thus, the number of kiln furniture T-cassettes may be odd or even.

In one embodiment, the number of kiln furniture H-cassette(s) is n and the number of kiln furniture T-cassette(s) is a·n, wherein a and n are integers larger than zero and may be odd or even. In one variant of this embodiment, n is at least 1, or n is at least 2 or n is at least 3 and a is at least 2, or a is at least 4, or a is at least 6.

In one embodiment, the number x of T-cassettes attached to one side of each H-cassette and the number y of T-cassettes attached to the opposite side of each H-cassette fulfil the relationship x = y ± 3, or fulfil the relationship x = y ± 2, or fulfil the relationship x = y ± 1. This embodiment provides the further advantage that even in the worst case scenario of a failure of one or more of the T-cassettes, e.g., in case all the male engagement portions of the T-cassettes break or the supporting object itself breaks, and a subsequent collapse of the assembly, the assembly would not come into contact with the kiln walls which would require undesired and unnecessary maintenance of the kiln.

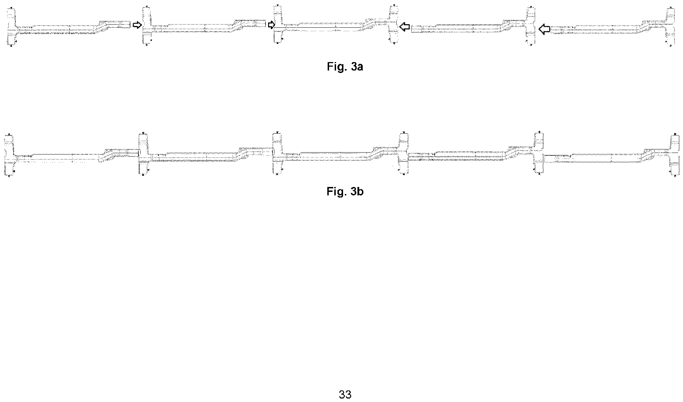

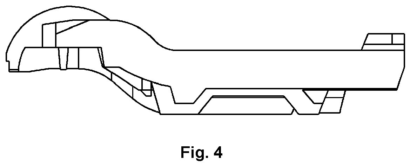

The T-cassettes connected to one side of an H-cassette may differ from the T-cassettes connected to the other side of the same H-cassette. An example of such an assembly is shown in Figs. 3a (prior to connection) and 3b (after connection). Such use of different T-cassettes on each of the two side of an H-cassette allows for arranging ceramic objects to be fired in the kiln using the same orientation on each of the cassettes even in case the structure of the ceramic objects to be fired is more complex, for example in case protrusions and/or recesses should be present on the supporting surface(s), such as for the roofing tile shown in Fig. 4.

In one embodiment, the feet of the T-cassettes according to the first aspect and of the H-cassettes as defined in the second aspect are shaped to allow the kiln furniture cassette(s) to be stacked on top of one another thereby forming a blade. For H-cassettes such means are generally known in the art and such means are also suitable for the T-cassettes according to the present disclosure.

In one embodiment, the kiln furniture assembly comprises a plurality of H-cassettes and a plurality of T-cassettes, wherein at least one T-cassette is connected through their engaging male and female engagement portions to each H-cassette, thereby forming rows, each row comprising an H-cassette and at least one T-cassette, further wherein at least two of these rows are stacked on top of one another thereby forming a blade. The number of rows stacked on top of one another is not particularly limited *per se* but limited by the height of the kiln. In one variant of this embodiment, the H-cassettes of each row are directly stacked on top of one another.

### T- and H-cassettes

In the following, further embodiments of the T-cassette according to the present disclosure and the H-cassette as defined in the present disclosure are described. These embodiments apply to all aspects and embodiments of the present disclosure unless the context dictates otherwise and/or unless mentioned to the contrary.

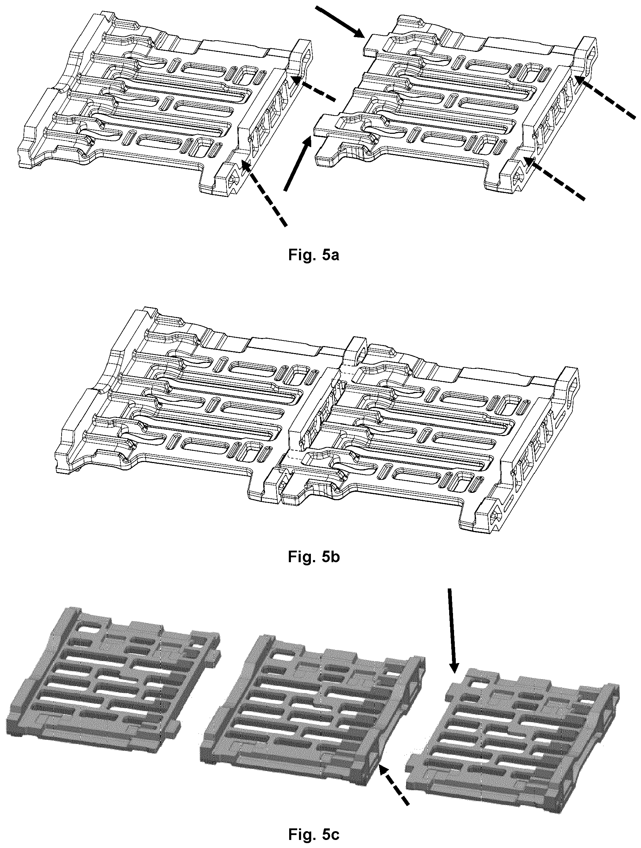

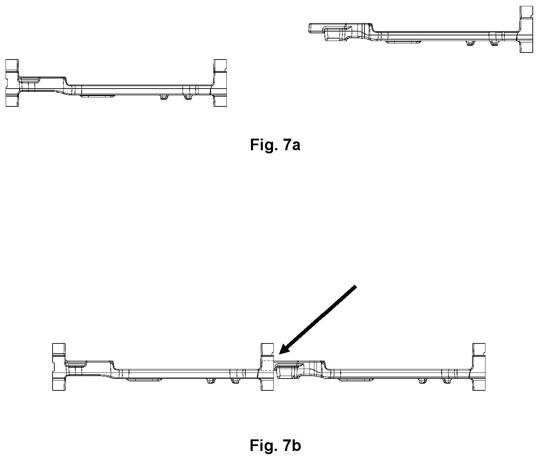

Corresponding male and female engagement portions are generally known in the art and are not particularly limited in the present application. Figs. 5a, 5b, 5c, 6a and 6b show examples of male and female engagement portions on separate cassettes (Fig. 5a, 5c and 6a) and on connected cassettes (Figs. 5b and 6b). The male engagement portions are indicated by solid arrows and the female engagement portions by dashed arrows. For sake of visibility, in Fig. 6a the female engagement portions are only indicated on the rightmost cassette. Further examples of male and female engagement portions are shown in Figs. 7a and 7b. The dashed line in Fig. 7b indicates the engagement of the female and male engagement portions (indicated with an arrow). Yet further examples are shown in Figs. 2a to 3b.

In one embodiment, the supporting object of the kiln furniture cassette(s) is/are perforated. Thereby, the thermal mass of the cassettes may be reduced and the air circulation may be improved. Furthermore, the handling of the cassettes using specific handling equipment is facilitated.

In one embodiment, the supporting object of the kiln furniture cassette(s) is/are perforated and the ratio of the area of the perforations in the supporting object to the area of the cassette is at least about 0.20, for example at least about 0.30 or at least about 0.40. Usually, this ratio is not higher than 0.60.

The area of the perforations in the supporting object is the area of the perforations viewed perpendicular to the supporting surface(s) and the area of the cassette is the area covered by the circumference of the cassette viewed perpendicular to the supporting surface(s).

In another embodiment, the supporting object of the kiln furniture cassette(s) is/are not perforated.

In one embodiment, the feet of the kiln furniture cassette(s) are shaped to allow the kiln furniture cassette(s) to be stacked on top of one another.

In one embodiment each cassette is reversible. A reversible cassette is a cassette having two supporting surfaces opposite to each other. These two supporting surfaces are usually substantially parallel to each other. These two supporting surfaces can be suitable for supporting different ceramic object(s), thereby increasing the versatility of the cassette and reducing or avoiding the need for storing different cassettes for different ceramic objects to be fired. Alternatively, these two supporting surfaces can be suitable for supporting the same ceramic object(s).

In case a cassette is reversible, and the cassettes is perforated, the ratio of the area of the perforations in the supporting object to the area of the cassette is determined as defined above for both supporting surfaces, the values are added together and divided by two.

In one embodiment, the supporting surface(s) of the kiln furniture cassette(s) has/have a substantially rectangular shape. In one embodiment, the cassette is reversible and both supporting surface(s) of the respective cassette have substantially rectangular shape.

In one embodiment, the supporting object(s) of the kiln furniture cassette(s) is/are perforated and the supporting surface(s) has/have a substantially rectangular shape.

In another embodiment, the supporting object(s) of the kiln furniture cassette(s) is/are not perforated and the supporting surface(s) has/have a substantially rectangular shape.

In one embodiment, the feet of the kiln furniture cassette(s) have flat upper and lower surfaces.

In one embodiment, the kiln furniture cassette(s) have their supporting surfaces designed to receive one or several inlays in order to adapt its shape to a product to be fired.

The kiln furniture cassettes of and used in the present disclosure may be made of any material suitable for use in a kiln, as commonly known to the skilled person in the art. They may be made of a ceramic material, such as a ceramic refractory material. As mentioned above, the ratio of the mass of the kiln furniture compared to the mass of the products to be fired may be reduced as much as possible. Therefore it is advantageous to use a light-weight ceramic material, such as a material comprising a ceramic matrix and ceramic microspheres, as disclosed in international patent application published under WO 2009/077589 A1, which contents are hereby incorporated by reference in their entirety. In one embodiment, the material of the said kiln furniture cassettes according to the present invention may comprise a ceramic such as an aluminosilicate ceramic, cordierite, mullite and silicon carbide and/or any combination thereof. The said kiln furniture cassettes may be made of the same material, in order to avoid a difference in thermal expansion coefficients between the materials, which may lead to increased abrasion and strain at the engaging connected male and female engagement portions, respectively, which would reduce the stability of the assembly as a whole and shorten the lifetime of the said kiln furniture cassettes.

Methods for forming kiln furniture cassettes are known in the art. These methods can be equally applied to the T-cassette according to the present disclosure.

### Method for forming a kiln furniture assembly

As outlined above, in accordance with the third aspect, there is provided a method for forming a kiln furniture assembly for supporting objects to be fired in a kiln, comprising the following steps:
a) providing at least one T-cassette according to the present disclosure;
b) providing at least one H-cassette as defined in the present disclosure;
c) connecting one T-cassette with one H-cassette through their engaging male and female engagement portions, thereby forming a row;
d) optionally, expanding the row of step c) by connecting further T-cassettes with the T- and/or the H-cassette of step c);
e) optionally, repeating steps c) and d), if present, once or several times thereby forming (a) further row(s);
f) if step e) is present, optionally stacking two or more rows on top of one another thereby forming a blade.

Embodiments of the T- and H-cassettes according to the present disclosure are also embodiments in accordance with the third aspect and *vice versa.*

Furthermore, embodiments of the assembly of the present disclosure are also embodiments in accordance with method of the third aspect and *vice versa.*

In the above method, the, or each row formed in step c) and optionally expanded in step d) comprises only one H-cassette.

In case two or more rows are stacked on top of one another thereby forming a blade in step f), usually, the H-cassettes of each of these rows are directly stacked on top of one another.

In one embodiment, the cassettes are arranged to allow each male engagement portion and female engagement portion to undergo thermal expansion without restriction when heated to a temperature of up to 1230°C. This has been explained in detail for the second aspect above and applies *mutatis mutandis.*

In one embodiment, the thermal expansion is about 0.15% or more based on the dimensions of the T-cassette, for example about 0.20% or more, or about 0.25% or more. Usually, the thermal expansion is 0.50% or less based on the dimensions of the T-cassette. As well-known in the art, a kiln furniture cassette expands in all directions upon heating. Hence, a percentage value based on the dimensions of the T-cassette is given. In the present disclosure, the thermal expansion denotes the total increase in the direction of measuring the thermal expansion.

The length of the rows formed by the method of the present disclosure is not limited *per se.* Hence, in principle, the length could be infinite. However, as explained above, the row size used depends on the size of the kiln. Likewise, the number of rows which can be stacked on top of one another depends on the size of the kiln. Thus, the method of the present disclosure is suitable for forming a single row consisting of one T- and one H-cassette only as well as for forming a plurality of rows (in step e)), each comprising a plurality of T-cassettes (in step d)), wherein this plurality of rows is stacked on top of one another thereby forming a blade. Thus, the number of further T-cassettes used in step d) and the number of rows formed in step e) is selected based on the size of the kiln. The skilled person can easily determine these numbers based on the used kiln. In one embodiment, optional steps d), e) and/or f) are repeated depending on the size of the kiln.

For example, the number of T-cassettes used in step d) is at least one, or at least three or at least five and/or steps c) and d) are repeated at least once, or at least three times or at least five times.

In one embodiment, step e) is present, and the method further comprises the following step:
e1) arranging two or more of the rows formed in step e) parallel to each other in horizontal direction.

In this embodiment, in step f), optionally further rows are stacked on top of one or more of the rows arranged parallel to each other in horizontal direction in step e1) thereby forming at least one blade, for example further rows are stacked on top of each of the rows arranged parallel to each other in horizontal direction in step e1) thereby forming a plurality of blades arranged parallel to each other in horizontal direction.

### Kit-of-parts

As outlined above, in accordance with the fourth aspect, there is provided a kit-of-parts for supporting objects to be fired in a kiln, comprising
a) one or more kiln furniture T-cassette(s) according to the present disclosure;
b) one or more kiln furniture H-cassette(s) as defined in the present disclosure.

Embodiments of the T- and H-cassettes according to the present disclosure are also embodiments in accordance with the fourth aspect and *vice versa.*

Furthermore, embodiments of the assembly and method of the present disclosure are also embodiments in accordance with the fourth aspect and *vice versa.*

In one embodiment, the number of kiln furniture T-cassette(s) is the same or higher than the number of kiln furniture H-cassette(s), for example the number of kiln furniture T-cassette(s) may be at least about two times higher, or at least about four times higher or at least about six times higher than the number of kiln furniture H-cassette(s). The total number of cassettes in the assembly according to the present disclosure is limited by the size of the kiln. Thus, the number of kiln furniture T-cassettes may be odd or even.

In one embodiment, the number of kiln furniture H-cassette(s) is n and the number of kiln furniture T-cassette(s) is a·n, wherein a and n are integers larger than zero and may be odd or even. In one variant of this embodiment, n is at least 1, or n is at least 2 or n is at least 3 and a is at least 2, or a is at least 4, or a is at least 6.

In one embodiment, the kit-of-parts comprises a plurality of T-cassette(s) and a plurality of H-cassette(s), wherein at least one T-cassette is connected through their engaging male and female engagement portions to each H-cassette.

### Use

As outlined above, in accordance with the fifth aspect, there is provided a use of a kiln furniture T-cassette comprising:
a) a supporting object comprising:
   - one or two supporting surface(s) for supporting one or more ceramic object(s) to be fired; and
   - side surfaces;
b) one or more feet located on a side surface, wherein said one or more feet are exclusively located on a single side surface;
c) at least one of the one or more feet comprising one or more holes and/or recesses suitable for acting as a female engagement portion for appropriately shaped male engagement portions of another kiln furniture cassette; and
d) one or more male engagement portions located on a side surface for appropriately shaped female engagement portions of another kiln furniture cassette;
for supporting one or more ceramic object(s) to be fired in a kiln.

Embodiments of the T- and H-cassettes according to the present disclosure are also embodiments in accordance with the fourth aspect and *vice versa.*

Furthermore, embodiments of the assembly and method of the present disclosure are also embodiments in accordance with the fifth aspect and *vice versa.*

In the present disclosure, the ceramic objects to be fired may be clay roofing tiles.

The T-cassette(s), according to the present disclosure can be used in existing kilns to replace commonly used arrangement of juxtaposed H-cassette(s) or the like. Furthermore, the T-cassette(s), according to the present disclosure save space and allow for an odd and an even number of cassettes in a row, thereby enabling to most efficiently use the available space in a kiln.

In certain embodiments, the aspects of the present application may have one or more of the following effects:
- reduced thermal mass of the cassettes;
- reduction of abrasion and chipping of the cassettes,
- reduced costs of the cassettes;
- narrower arrangement of the objects to be fired in the kiln and, thus, better cost-efficiency of the process
- a more stable blade of cassettes, due to the connection of the cassettes via their female and male engagement portions;

For the avoidance of doubt, the present application is directed to subject-matter described in the following numbered paragraphs.
1. A kiln furniture T-cassette for supporting ceramic objects to be fired in a kiln, comprising:
   a) a supporting object comprising:
      - one or two supporting surface(s) for supporting one or more ceramic object(s) to be fired; and
      - side surfaces;
   b) one or more feet located on a side surface, wherein said one or more feet are exclusively arranged on a single side surface;
   c) at least one of the one or more feet comprising one or more holes and/or recesses suitable for acting as a female engagement portion for appropriately shaped male engagement portions of another kiln furniture cassette; and
   d) one or more male engagement portions located on a side surface for appropriately shaped female engagement portions of another kiln furniture cassette.
2. The kiln furniture T-cassette according to numbered paragraph 1, wherein the male and female engagement portions are arranged substantially parallel to the supporting surface(s) and/or are arranged substantially perpendicular to the one or more feet.
3. The kiln furniture T-cassette according to any one of the preceding numbered paragraphs, wherein the male and female engagement portions are arranged on opposing side surfaces.
4. A kiln furniture assembly for supporting ceramic objects to be fired in a kiln, comprising:
   a) one or more kiln furniture T-cassette(s) according to any one of the preceding numbered paragraphs; and
   b) one or more kiln furniture H-cassette(s), comprising
      i) a supporting object comprising:
         - one or two supporting surface(s) for supporting one or more ceramic object(s) to be fired; and
         - side surfaces;
      ii) one or more feet located on each of two opposite side surfaces; and
      iii) at least one of the one or more feet on each of the two opposite side surfaces comprising one or more holes and/or recesses suitable for acting as one or more female engagement portion(s) for appropriately shaped male engagement portion(s) of another kiln furniture cassette;
      wherein at least one T-cassette and at least one H-cassette are connected through their engaging male and female engagement portions.
5. The kiln furniture assembly according to numbered paragraph 4, wherein the cassettes are arranged to allow each male engagement portion and female engagement portion to undergo thermal expansion without restriction when heated to a temperature of up to 1230°C.
6. The kiln furniture assembly according to numbered paragraph 5, wherein the thermal expansion is about 0.15% or more based on the dimensions of the T-cassette.
7. The kiln furniture assembly according to any one of numbered paragraphs 4 to 6, wherein the number of kiln furniture T-cassette(s) is the same or higher than the number of kiln furniture H-cassette(s).
8. The kiln furniture assembly according to any one of numbered paragraphs 4 to 7, wherein the number of kiln furniture H-cassette(s) is n and the number of kiln furniture T-cassette(s) is a.n, wherein a and n are integers larger than zero.
9. The kiln furniture assembly according to any one of the preceding numbered paragraphs 4 to 8, wherein the number x of T-cassettes attached to one side of each H-cassette and the number y of T-cassettes attached to the opposite side of each H-cassette fulfil the relationship x = y ± 3.
10. The kiln furniture assembly according to any one of numbered paragraphs 4 to 9, comprising a plurality of H-cassettes and a plurality of T-cassettes, wherein at least one T-cassette is connected through their engaging male and female engagement portions to each H-cassette, thereby forming rows, each row comprising an H-cassette and at least one T-cassette.
11. The kiln furniture assembly according to numbered paragraph 10, wherein at least two of these rows are stacked on top of one another thereby forming a blade.
12. The kiln furniture T-cassette(s) according to any one of numbered paragraphs 1 to 3, or the kiln furniture assembly according to any one of numbered paragraphs 4 to 11, wherein the supporting surface(s) of the kiln furniture cassette(s) is/are perforated and/or has/have a substantially rectangular shape.
13. The kiln furniture T-cassette(s) according to any one of numbered paragraphs 1 to 3, or the kiln furniture assembly according to any one of numbered paragraphs 4 to 11, wherein the supporting surface(s) of the kiln furniture cassette(s) is/are not perforated and the supporting surface(s) has/have a substantially rectangular shape.
14. The kiln furniture T-cassette(s) according to any one of numbered paragraphs 1 to 3, 12 or 13, or the kiln furniture assembly according to any one of numbered paragraphs 4 to 13, wherein the feet of the kiln furniture cassette(s) are shaped to allow the kiln furniture cassette(s) to be stacked on top of one another.
15. The kiln furniture T-cassette(s) according to any one of numbered paragraphs 1 to 3 or 12 to 14, or the kiln furniture assembly according to any one of the preceding numbered paragraphs 4 to 14, wherein each cassette is reversible.
16. A method for forming a kiln furniture assembly for supporting objects to be fired in a kiln, comprising the following steps:
   a) providing at least one T-cassette according to any one of numbered paragraphs 1 to 15;
   b) providing at least one H-cassette as defined in any one of numbered paragraphs 4 to 15;
   c) connecting one T-cassette with one H-cassette through their engaging male and female engagement portions, thereby forming a row;
   d) optionally, expanding the row of step c) by connecting further T-cassettes with the T- and/or the H-cassette of step c);
   e) optionally, repeating steps c) and d), if present, once or several times thereby forming (a) further row(s);
   f) if step e) is present, optionally stacking two or more rows on top of one another thereby forming a blade.
17. The method according to numbered paragraph 16, wherein the cassettes are arranged to allow each male engagement portion and female engagement portion to undergo thermal expansion without restriction when heated to a temperature of up to 1230°C.
18. The method according to numbered paragraph 17, wherein the thermal expansion is about 0.15% or more based on the dimensions of the T-cassette.
19. A kit-of-parts for supporting objects to be fired in a kiln, comprising:
   a) one or more kiln furniture T-cassette(s) according to any one of numbered paragraphs 1 to 15; and
   b) one or more kiln furniture H-cassette(s) as defined in any one of numbered paragraphs 4 to 15.
20. The kit-of-parts according to numbered paragraph 19, comprising a plurality of T-cassette(s) and a plurality of H-cassette(s), wherein at least one T-cassette is connected through their engaging male and female engagement portions to each H-cassette.
21. Use of a kiln furniture T-cassette comprising:
   a) a supporting object comprising:
      - one or two supporting surface(s) for supporting one or more ceramic object(s) to be fired; and
      - side surfaces;
   b) one or more feet located on a side surfaces, wherein said one or more feet are exclusively arranged on a single side surface;
   c) at least one of the one or more feet comprising one or more holes and/or recesses suitable for acting as a female engagement portion for appropriately shaped male engagement portions of another kiln furniture cassette; and
   d) one or more male engagement portions located on a side surface for appropriately shaped female engagement portions of another kiln furniture cassette;
   for supporting one or more ceramic object(s) to be fired in a kiln.

### EXAMPLE

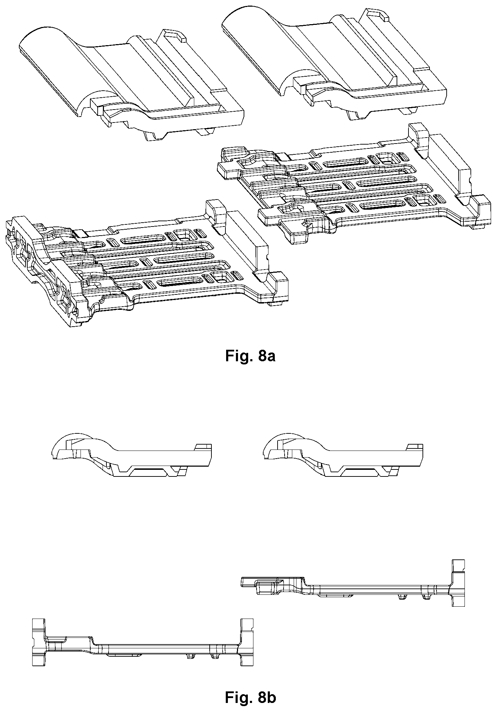

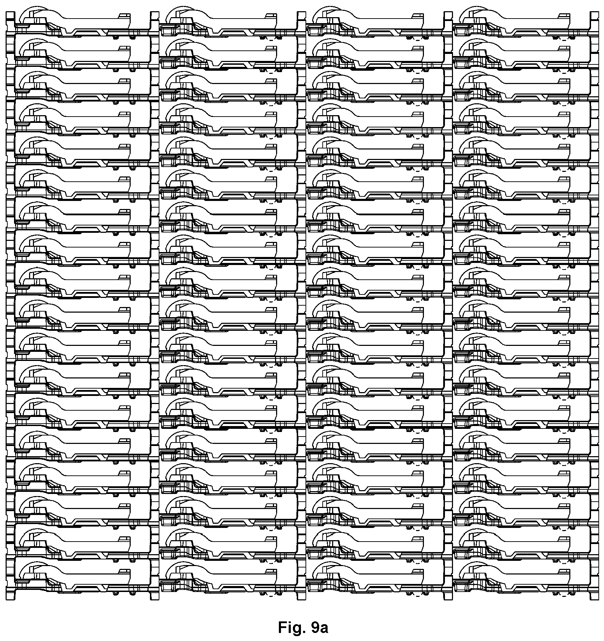

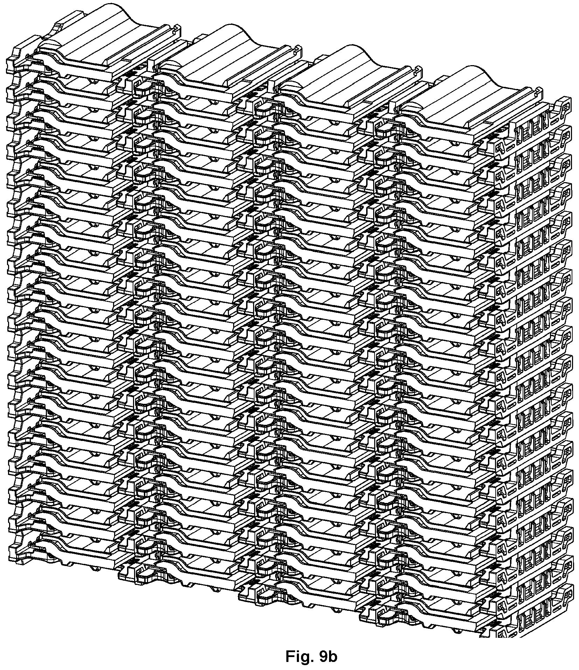

Figs. 8a and 8b show two views of an H-cassette, a T-cassette and two identical roofing tiles to be fired in a kiln prior to connecting the cassettes. Figs. 9a and 9b show two views of a plurality of rows of T-cassettes connected to an H-cassette stacked on top of one another and loaded with roofing tiles to be fired.

As can be seen in these figures, the number of ceramic objects which can be fired simultaneously in the kiln can be increased, because the T-cassettes consume less space compared with H-cassette(s). Hence, the costs per ceramic object are reduced. Furthermore, the thermal mass of the cassettes is reduced due to the reduced number of feet present. Furthermore, by arranging the cassettes to allow each male engagement portion and female engagement portion to undergo thermal expansion without restriction when heated (as described in detail above), abrasion and chipping is reduced, because the feet of the T-cassette are not forced to undergo a relative movement with respect to the reinforced resting spots of the kiln car.

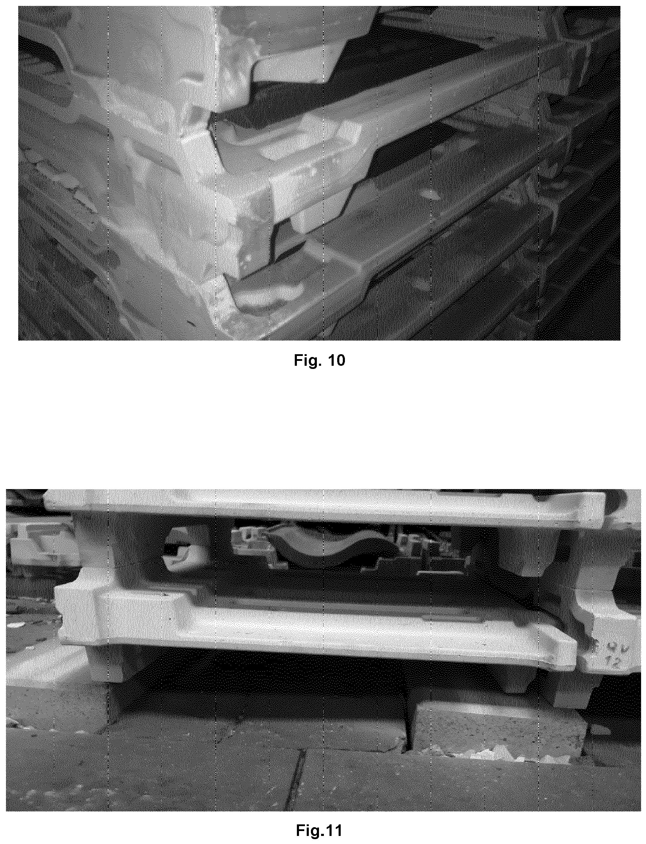

Fig. 10 shows regular H cassettes after usage, wherein it can be seen that the feet have chipped. Fig.11 shows cassettes according to the present invention after usage, wherein the feet edges remain sharp. Thereby, the lifetime of the cassettes is improved allowing for longer use before replacement is required, thereby further reducing the costs.

## Claims

1. A kiln furniture T-cassette for supporting ceramic objects to be fired in a kiln, comprising:
a) a supporting object comprising:
- one or two supporting surface(s) for supporting one or more ceramic object(s) to be fired; and
- side surfaces;
b) one or more feet located on a side surface, wherein said one or more feet are exclusively arranged on a single side surface;
c) at least one of the one or more feet comprising one or more holes and/or recesses suitable for acting as a female engagement portion for appropriately shaped male engagement portions of another kiln furniture cassette; and
d) one or more male engagement portions located on a side surface for appropriately shaped female engagement portions of another kiln furniture cassette.

2. The kiln furniture T-cassette according to claim 1, wherein
(i) the male and female engagement portions are arranged substantially parallel to the supporting surface(s) and/or are arranged substantially perpendicular to the one or more feet; and/or
(ii) the male and female engagement portions are arranged on opposing side surfaces.

3. A kiln furniture assembly for supporting ceramic objects to be fired in a kiln, comprising:
a) one or more kiln furniture T-cassette(s) according to any one of the preceding claims; and
b) one or more kiln furniture H-cassette(s), comprising
i) a supporting object comprising:
- one or two supporting surface(s) for supporting one or more ceramic object(s) to be fired; and
- side surfaces;
ii) one or more feet located on each of two opposite side surfaces; and
iii) at least one of the one or more feet on each of the two opposite side surfaces comprising one or more holes and/or recesses suitable for acting as one or more female engagement portion(s) for appropriately shaped male engagement portion(s) of another kiln furniture cassette;
wherein at least one T-cassette and at least one H-cassette are connected through their engaging male and female engagement portions.

4. The kiln furniture assembly according to claim 3, wherein the cassettes are arranged to allow each male engagement portion and female engagement portion to undergo thermal expansion without restriction when heated to a temperature of up to 1230°C, preferably wherein the thermal expansion is about 0.15% or more based on the dimensions of the T-cassette.

5. The kiln furniture assembly according to any one of claims 3 or 4, wherein the number of kiln furniture T-cassette(s) is the same or higher than the number of kiln furniture H-cassette(s).

6. The kiln furniture assembly according to any one of claims 3 to 5, wherein the number of kiln furniture H-cassette(s) is n and the number of kiln furniture T-cassette(s) is a·n, wherein a and n are integers larger than zero.

7. The kiln furniture T-cassette(s) according to any one of claims 1 or 2, or the kiln furniture assembly according to any one of claims 3 to 6, wherein the supporting surface(s) of the kiln furniture cassette(s) is/are perforated and/or has/have a substantially rectangular shape.

8. The kiln furniture T-cassette(s) according to any one of claims 1 or 2, or the kiln furniture assembly according to any one of claims 3 to 6, wherein the supporting surface(s) of the kiln furniture cassette(s) is/are not perforated and the supporting surface(s) has/have a substantially rectangular shape.

9. The kiln furniture T-cassette(s) according to any one of claims 1, 2, 7 or 8, or the kiln furniture assembly according to any one of claims 3 to 8, wherein the feet of the kiln furniture cassette(s) are shaped to allow the kiln furniture cassette(s) to be stacked on top of one another.

10. The kiln furniture T-cassette(s) according to any one of claims 1, 2, 7 to 9, or the kiln furniture assembly according to any one of the preceding claims 3 to 9, wherein each cassette is reversible.

11. A method for forming a kiln furniture assembly for supporting objects to be fired in a kiln, comprising the following steps:
a) providing at least one T-cassette according to any one of claims 1, 2, or 7 to 10;
b) providing at least one H-cassette as defined in any one of claims 3 to 10;
c) connecting one T-cassette with one H-cassette through their engaging male and female engagement portions, thereby forming a row;
d) optionally, expanding the row of step c) by connecting further T-cassettes with the T- and/or the H-cassette of step c);
e) optionally, repeating steps c) and d), if present, once or several times thereby forming (a) further row(s);
f) if step e) is present, optionally stacking two or more rows on top of one another thereby forming a blade.

12. The method according to claim 11, wherein the cassettes are arranged to allow each male engagement portion and female engagement portion to undergo thermal expansion without restriction when heated to a temperature of up to 1230°C, preferably wherein the thermal expansion is about 0.15% or more based on the dimensions of the T-cassette.

13. A kit-of-parts for supporting objects to be fired in a kiln, comprising:
a) one or more kiln furniture T-cassette(s) according to any one of claims 1, 2 or 7 to 10; and
b) one or more kiln furniture H-cassette(s) as defined in any one of claims 3 to 10.

14. The kit-of-parts according to claim 13, comprising a plurality of T-cassette(s) and a plurality of H-cassette(s), wherein at least one T-cassette is connected through their engaging male and female engagement portions to each H-cassette.

15. Use of a kiln furniture T-cassette comprising:
a) a supporting object comprising:
- one or two supporting surface(s) for supporting one or more ceramic object(s) to be fired; and
- side surfaces;
b) one or more feet located on a side surfaces, wherein said one or more feet are exclusively arranged on a single side surface;
c) at least one of the one or more feet comprising one or more holes and/or recesses suitable for acting as a female engagement portion for appropriately shaped male engagement portions of another kiln furniture cassette; and
d) one or more male engagement portions located on a side surface for appropriately shaped female engagement portions of another kiln furniture cassette;
for supporting one or more ceramic object(s) to be fired in a kiln.
